# EUROPEAN PATENT SPECIFICATION

(11) **EP 1 639 263 B1**
(45) Date of publication and mention of the grant of the patent: **17.08.2011**
(21) Application number: 04738940.8
(22) Date of filing: 23.06.2004
(51) Int. Cl.: F16B 5/12

(54) **A JOINT BETWEEN AN ELEMENT AND A RAIL, AND A METHOD OF MANUFACTURING A RAIL FOR SUCH JOINT AND A RAIL& xA;**
EINE VERBINDUNG ZWISCHEN EINEM ELEMENT UND EINER SCHIENE UND EIN VERFAHREN ZUR HERSTELLUNG EINER SCHIENE FÜR SOLCH EINE VERBINDUNG UND SCHIENE
LIAISON ENTRE UN ELEMENT ET UN RAIL, PROCEDE DE FABRICATION D'UN RAIL POUR UN TEL JOINT ET RAIL

(30) Priority: 27.06.2003 DK 200300974
(43) Date of publication of application: 29.03.2006
(73) Proprietor: VKR Holding A/S, 2970 Hørsholm (DK)
(72) Inventor: NIELSEN, Esben, Brun, DK-6950 Ringkobing (DK); MADSEN, Tage, DK-6990 Ulfborg (DK)
(74) Representative: Sundien, Thomas
(86) International application number: PCT/DK2004/000443
(87) International publication number: WO 2005/001297

(56) References cited:
- EP-A- 0 546 316
- US-A- 4 199 910
- US-A- 4 971 849

## Description

The invention relates to a joint between an element and an elongate rail having an abutment face that abutting on the element, said element being provided with a longitudinally extending groove protrusion extending from the abutment face of the rail, protruding laterally in relation to the rail, extending into the longitudinally extending groove of the element and being provided into a plurality of separate engagement pins spaced from each other in the longitudinally direction of the rail, The invention also relates to a rail for such a joint and a method of manufacturing a rail for such joint.

Joints and rails of this type are known from eg US-A-3 950 915 disclosing rail used for the assembly of two panels at a right angle. The rail shown in that disclosure comprises a body part being provided on the outside with an abutment face abutting on the one panel. The abutment face is provided with an outwardly oriented longitudinally extending protrusion with barbs, and that protrusion is pressed down into a longitudinally extending groove provided in the panel. A similar manner of mounting a rail in an element is known from US design patent No. 246 949. This rail is mounted in a corresponding manner and constitutes a handle on a drawer, a door or the like.

Another two disclosures which disclosure joints which share certain technical features with the joint as mentioned in the introductory paragraph are US- 4,199,910 and US-4,971,849. Both of these disclosures disclose strips made from flexible material which are used to protect the edges of objects, for example, the edge of a table. Another field where a rail is mounted on an element is in a reversible window technical features with Such reversible window comprises a frame and a sash and is configured such that the sash can be pivoted almost 180° about a horizontal axis. In order to provide this movement mechanism the sash is hinged at both sides by means of a hinge that can be shifted outwards. At the top part of the sash a slider element is configured to both sides that is in sliding engagement with a U-shaped slide rail which is attached to the lateral piece of the frame. When the window is opened, the lowermost part of the sash is shifted outwards, while the upper part is shifted slightly downwards, said slider elements sliding downwards in their engagement with the slide rails. Hereby the sash can be pivoted almost 180° about a horizontal axis, whereby the outside of the window can be accomplished from within.

In this prior art reversible window the slide rails are mounted by means of nails that are driven in through the one leg of the U-profile of the slide rail. This kind of mounting, however, has two drawbacks: the mounting of the slide rail is work- and time-intensive and the nail heads may be in the way when it comes to free displacement of the slider element in the slide rail. It may therefore be desirable to be able to mount a slider rail having a smooth inside - for practical as well as aesthetic reasons.

It could be obvious to mount the slider rail in the reversible window in the same manner as the rails shown in the disclosures mentioned above. However, it has been found to be desirable to mount the slider rail in a relatively narrow part of the frame, which is often made of wood, and with the prior art configurations of rail mountings there is a high risk of the frame cracking since the continuous, longitudinally extending protrusion exerts a relatively large sideways force on the groove into which it is pressed.

It is therefore an object of the invention to provide a joint between an element and a rail which is both strong and stable and simultaneously eliminates the risk of the element cracking when the rail is mounted.

This is accomplished in that the cross section of the engagement pins (18;28) is angled in the relation to longitudinal direction of the rail (15)

Hereby it is accomplished that the engagement means of the rail press outwards in separate points and not along a continuous protrusion as is known from the prior art. Hereby the material of the element is better able to absorb the applied tensions as they are taken partially to the spaces between the engagement pins. The risk the elements into which the engagement pins are pressed cracking is thereby considerably reduced compared to the prior art joints wherein a continuous protrusion is used. It should be noted that the term "longitudinally extending groove" as used herein does not necessarily preclude that the groove extends from the one end of the element to the other. The term a "longitudinally extending groove" also covers a comparatively short groove - as long as its length exceeds the expanse of the individual engagement pins to accomplish the desired effect.

It is also hereby accomplished 1 that the corners of the engagement pins protrude beyond the general width of the engageement pins, and those comers will engage with the is mounted. Hereby good attachement is accomplished against longitudinal displacement of the rail relative to the element According to a first embodiment the mutual distance between the engagement pins is of the same magnitude as the expanse of the engagement pins in the longitudinal direction of the rail. Hereby the engagement pins are caused to appear as a continuous protrusion; yet while preserving the above-described advantages.

According to a second embodiment the mutual distance between the engagement pins is considerably larger than the expanse of the engagement pins in the longitudinal direction of the rail. Hereby a larger distance is accomplished between the point load of the groove of the element, and the risk of the element cracking is further reduced.

Preferably glue is applied between the engagement pins and the groove, whereby a very stable joint is accomplished between the element and the rail. The glue is arranged between the engagement pins and the side walls of the groove, and any excessive glue will distribute in the spaces between the engagement pins. The risk of cracking is thereby further reduced compared to a scenario in which a continuous protrusion is used, in which any excessive glue will press further outwards on the sidewalls of the groove with an ensuing increased risk of the element cracking.

According to a preferred embodiment the engagement pins have an essentially square cross section

In order to enhance the attachment of the rail against being pulled out, the engagement pins may advantageously be provided with flange that protrude. laterally in relation to the longitudinal direction of the rail and optionally also protruding flange on those sides of the engagement pins that face towards each other. These flange will serve as barbs if the slide rail is exposed to an outwardly oriented pull force.

As mentioned above, the invention also relates to a method of manufacturing an elongate rail for mounting on an element. The method

comprises the step of extruding a rail having a protrusion that protrudes laterally and extends longitudinally in relation to a longitudinal direction of the rail, and comprising the step of removing portions of the protrusion whereby separate engagement pins are formed having a mutual distance in the longitudinal direction of the rail. The method furthermore comprises the step of the engagement pins being angled. In relation to the longitudinal direction of the rail by an asymmetrical pressure being applied onto opposite sides thereof. This way of manufacturing the rail is very simple and it is possible to employ entirely current methods, such as extrusion of a profile and subsequent processing thereof eg by punching.

According to a first embodiment so much of the protrusion is removed that the mutual distance between the engagement pins is of the same magnitude as the expanse of the engagement pins in the longitudinal direction of the rail. This entails little waste of material, and the engagement means on the rail thus manufactured act as a continuous protrusion, without being one.

Alternatively so much of the protrusion can be removed that the mutual distance between the engagement pins considerably exceeds the expanse of the engagement pins in the longitudinal direction of the rail. Hereby a spot load of the element on which the rail is mounted is accomplished and the risk of the elements cracking is reduced.

The engagement means can be improved further by the engagement pins being, in the extrusion process, provided with flange that protrude to the side in relation to the longitudinal direction of the rail. Besides, by removal of portions of the protrusion protruding flange are formed on those sides of the engagement pins that face towards each other.

Preferably the extruded rail with the continuous, longitudinally extending protrusion is transferred to a punching tool that removes portions of the protrusion by punching. The invention also relates to an elongate rail for mounting on an element as defined by independent claim 14.

The invention will now be explained in further detail with reference to the drawing, wherein
Figure 1 shows an element for closing off an embrasure opening in a building in the form of a reversible window;
Figure 2 shows a detail in the use of a rail in the reversible window shown in Figure 1;
Figure 3 shows mounting of a rail in an element according to a first embodiment;
Figure 4 shows the rail shown in Figure 3, seen from below;
Figure 5 is a cross-sectional view of the rail and the element shown in Figure 3 following mounting of the rail;
Figure 6 shows a further embodiment for mounting of a rail in an element;
Figure 7 shows an alternative use of the rail shown in Figure 6; and
Figures 8a and 8b show two partially processed and still coherent rails.

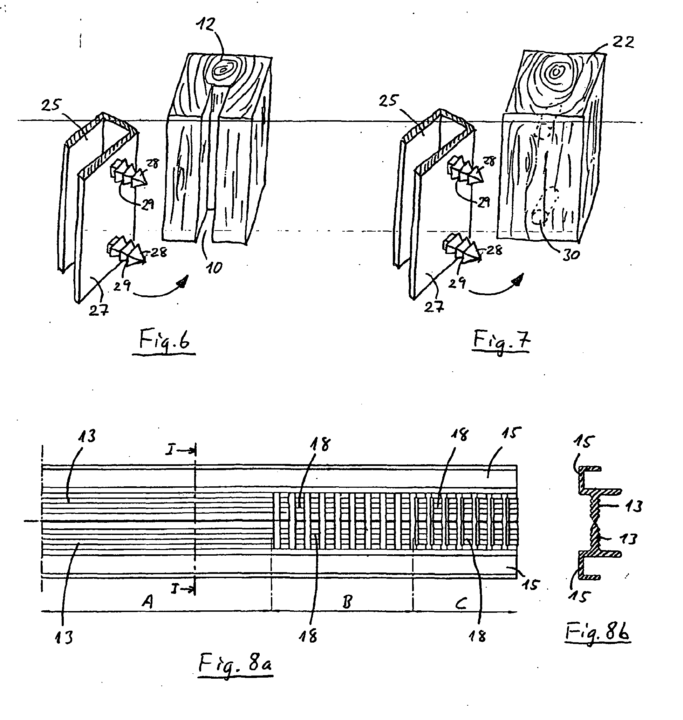

It should be noted that the embodiments shown in figures 6 and 7 are not a pan of the invention as claimed in the current claim set.

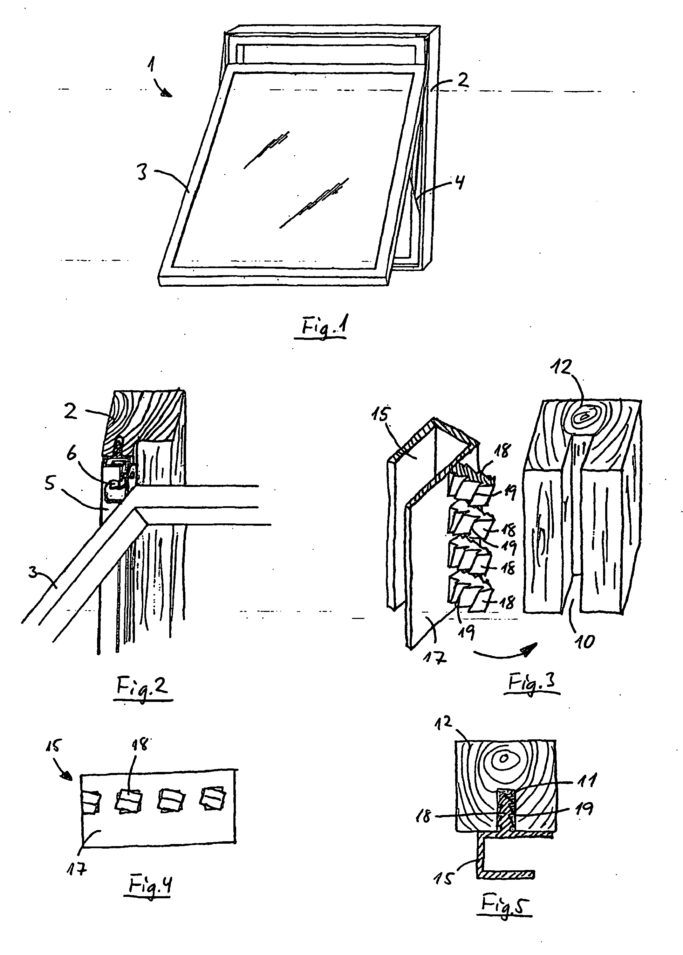

Figure 1 shows a reversible window 1 comprising two main elements: a frame 2 and a sash 3. The frame 2 constitutes the outer part of the reversible window 1 and fits into an embrasure opening in a building. The sash 3 fits into the frame 2 and is provided with a sheet of glass. Between the frame 2 and the sash 3 hinges 4 are provided at each side and configured such that the sash 3 can be tilted about a horizontal axis as shown in Figure 1, then lowermost end of the sash 3 being shifted outwards, while the upper end remains in vertically displaceable engagement with the frame 2. The present invention lends itself for use in particular in connection with the displaceable engagement between the frame 2 and the sash 3, and all of the remaining configurative details of the frame 2, the sash 3 and the hinges 4 will not be subject to detailed discussion herein.

As will appear clearly from Figure 2 that shows a detail of the reversible window 1 shown in Figure 1, the displaceable engagement between the frame 2 and the sash 3 comprises a U-shaped rail 5 mounted in the frame 2 and a slide element 6 being mounted turnably on the uppermost part of the sash 3. Of course, a rail 5 is mounted in both sides of the frame 2 and a slide element 6 is mounted in both sides of the sash 3. It should be emphasized that Figure 2 shows a simplified version of the reversible window 1 as it actually comprises more elements than the ones shown.

It is the object of the displaceable engagement between the uppermost part of the sash 3 and the frame 2 to allow the sash to be turned 180° or at least approximately 180° about a horizontal axis. This is enabled by a combination of the configuration of the hinges 4 and the displaceable engagement between the sash 2 and the frame 3. When the lowermost part of the frame 3 is thus displaced outwards, the uppermost part of the frame 3 is thus displaced downwards as shown in Figure 1, the slide elements 6 being displaced in the rails 5 at each side of the reversible window 1. By further displacement outwards of the lowermost part of the sash 3 the uppermost part of the sash 3 is displaced downwards until the uppermost part of the sash 3 is situated at the bottom of the frame 2 with each slide element 6 in engagement with the lowermost part of the associated rail 5. When the sash 3 is turned 180° in this manner, it is possible to clean the outside of the reversible window from within.

The present invention relates to the rail 5 and in particular to its mounting in the frame 2. It is to be noted that the invention is not restricted to this specific use, as it lends itself for use just as readily in other contexts in which a rail is mounted in an element. Thus, in figures 3, 5 and 2 the frame 2 is therefore shown more schematically than in Figure 2, and, moreover, it will be designated merely by the term "an element".

Figure 3 shows a U-shaped rail 15 and an element 12 in a first embodiment according to the invention immediately prior to the rail 15 being mounted in the element 12. As will appear the outside of the one leg in the U-shaped rail 15 constitutes an abutment face 17 that will, following mounting, adjoin the element 12. Protruding from the abutment face 17, a plurality of engagement pins 18 are provided that have flange 19 that protrude latterally. The engagement pins 18 have a short expanse in the longitudinal direction of the rail 15 and are arranged at a relatively short mutual distance. Practice has shown that the engagement pins 18 can advantageously have a square cross section and that the distance between the engagement pins 18 can be about two thirds of the expanse of the engagement pins 18 in the longitudinal direction of the rail 15. If thus the engagement pins 18 have a cross section of about 3 by 3 mm, the mutual distance between the engagement pins 18 is about 2 mm.

The rail 15 can be moulded from plastics, metal or a composite material, since thereby the engagement pins 18 can be moulded in one operation simultaneously with the rail 15 as such. Preferably the rail 15, however, is extruded from eg aluminium as it is, as a starting point, configured with one continuous protrusion instead of the engagement pins 18. By means of a tool, portions of the protrusion are removed at regular intervals, whereby a plurality of short engagement pins 18 are formed, as shown in Figure 3.

The element 12 is provided with a longitudinally extending groove 10 configured to receive the engagement pins 18 when the rail 15 is mounted on the element 2. The groove 10 has a width that corresponds essentially to the width of the engagement pins 18. However, preferably the width of the groove 10 is slightly smaller than the width of the engagement pins 18, whereby the engagement pins 18 are to be pressed into the groove 10 during mounting. Hereby good attachment is accomplished which is further enhanced by the engagement pins 18 being provided with flange 19 that extend laterally and serve as barbs against the engagement pins 18 being unintentionally pulled out of the element 12 following mounting therein.

In order to accomplish additionally large holding force against tearing out and longitudinal displacement in the groove 10 of the element 12, the engagement pins 18 are twisted about their longitudinal axis. This will also appear from Figure 4 that shows the rail 15 shown in Figure 3, seen in a direction towards the engagement pins 18. The twisting of the engagement pins 18 preferably takes place by application of a pressure in opposite directions on opposite sides of each engagement pin 18. It has been found that an angulation of the engagement pins 18 of about 22° provides good attachment force when the rail 15 is mounted in the groove 10 in the element 12.

When the rail 15 is to be mounted on the element 12, the first step in the preferred method is to apply an amount of glue 11 (see Figure 5) into the groove 10 of the element 12. Then the engagement pins 18 of the rail 15 are pressed into the groove 10, while the glue 11 distributes within the groove 10 underneath and between the protrusions 18.

Since the groove 10 is preferably slightly narrower than the engagement pins 18, the outwardly protruding flange 19 of the engagement pins 18 will be pressed into the material of the element 12, which provides increased security against unintentional withdrawal of the engagement pin 18 from the element 12. In a simple and efficient manner, the angle rotation of the engagement pins 18 prevents the rail 15 from being displaceable longitudinally of the groove 10 in the element 12.

Figure 6 shows an alternative embodiment of a joint between an element and a rail according to the invention. In this embodiment a rail 25 is also provided with a plurality of engagement pins 28 that protrude from an abutment face 27 just like the rail 15 shown in figures 3-5. The engagement pins 28 that are in turn provided with protruding flange 29, however, are arranged at a considerably larger mutual distance than the engagement pins 18 on the rail 15. This means that the distance is longer between the point loads on the side walls of the groove 10 in the element 12 when the rail 25 is mounted. The risk of the element 12 cracking when the rail 25 is mounted is thus smaller than when the rail 15 is mounted as shown in Figure 3.

Preferably, the rail 25 is manufactured in the same manner as the rail 15, viz by initially extruding a slide rail with a continuous protrusion which is subsequently processed mechanically with removal of large portions of the protrusion until only a few separate engagement pins 28 remain which are spaced relatively far apart. The original continuous protrusion is preferably processed such that the engagement pins 28 are provided with flange 29 on all four sides as shown in Figure 6.

When the rail 25 is to be mounted on the element 12, the first step in the preferred method is to apply an amount of glue into the groove 10 of the element 12. Then the engagement pins 28 of the rail 25 are pressed into the groove 10, while the glue 11 distributes within the groove 10 underneath and between the protrusions 28.

Since the groove 10 is preferably slightly narrower than the engagement pins 28, the outwardly protruding flange 29 of the engagement pins 18 will be pressed into the material of the element 12, which provides increased security against unintentional withdrawal of the engagement pin 28 from the element 12. Those parts of the protruding flange 29 that are arranged on the sides of the engagement pins 28 that face towards each other will be surrounded by glue and therefore also contribute to securing the rail 25 against withdrawal.

It should be mentioned that the rail 25 with engagement pins 28 as shown in Figure 6 can also be mounted on an element without a groove if the element is manufactured from a relatively soft material, such as fir, merely by the engagement pins 28 being pressed into the element. This is shown in Figure 7 showing an element 22 without a longitudinally extending grove.

To this use the engagement pins 28 are preferably configured to be comparatively thick, whereby there is only a small risk of them being deflected sideways if, for instance, they were to be pressed into a hard material in the element 22, such as a knot or the like. In order to be sure that the element does not crack, however, a row of bores 30 are preferably drilled as outlined by dotted lines, the distance between them corresponding, of course, to the mutual spacing between the engagement pins 28. If bores 30 are drilled an amount of glue is preferably applied in each bore before the rail 25 is mounted.

As mentioned earlier the rail according to the invention can be moulded or manufactured by extrusion with subsequent processing of the engagement pins. It may be made of plastics, metal or a composite material; aluminium being, however, the preferred choice.

Figures 8a and 8b illustrate how the rail 15 according to the first embodiment of the invention can be manufactured by extrusion and subsequent processing of the extruded profile. Figure 8a shows the extruded profile with different degrees of processing, section A showing the profile as it leaves the extruder, and Figure 8b showing a cross sectional view of the extruded profile along the section I-I shown in Figure 8a. As will appear the extruded profile comprises two laterally reversed U-shaped rails 15 that are joined at the tip of a protrusion 13 that points to the side.

Section B of Figure 8a shows how a portion of the protrusion 13 has been removed, whereby engagement pins 18 are formed. Preferably this processing is made in a punching process, the extruded profile being conveyed into a punching tool that removes the desired portions of the protrusion 13.

In section C of Figure 8a, yet a processing is carried out, the engagement pins 18 having herein been angled. Preferably this angulation is performed in that a tool presses asymmetrically on opposed sides of each engagement pin 18, whereby it is turned as shown (see also Figure 4). The punching of portions of the protrusion 13 and the angulation of the engagement pins 18 preferably takes place in the same tool, a first part of the tool being configured to punch out parts of the protrusion 13, while another part is configured to press asymmetrically onto the engagement pins 18. During the subsequent punching the extruded profile is thus advanced through the tool. Finally the two rails 15 are separated from each other.

The element on which the rail is mounted may constitute a frame for a window as shown in figure 2, but it is not limited thereto. The element can be manufactured from a suitable material, such as wood, plastics, polyurethane or a wooden composite material. The choice of material is of no consequence to the invention, but obviously the concrete configuration of the rail as well as the element must be adapted to the selected materials.

The invention was described with reference to examples in which the rail has a U-shaped profile. However, it is stressed that the invention is not limited to this configuration; a wide variety of embodiments of the rail being possible, depending on the intended use of the rail. The cross-sectional profile of the rail may thus have any desired shape, and likewise it may be curved in the longitudinal direction. Likewise, the invention was described with reference to a reversible window, but the invention may just as well lend itself for use in many other contexts, in which a rail is to be mounted on an element in a concealed manner.

## Claims

1. A joint between an element (2; 12) and an elongate rail (5; 15 ) having an abutment face (17) abutting on the element, said element (2; 12) being provided with a longitudinally extending groove (10), and said rail (5; 15) being provided with a protrusion extending from the abutment face of the rail, protruding laterally in relation to a longitudinal direction of the rail (5; 15), extending into the longitudinally extending groove (10) of the element (2; 12) and being divided into a plurality of separate engagement pins (18 )spaced from each other in the longitudinal direction of the rail, **characterised in that** the cross section of the engagement pins (18) is angled in relation to the longitudinal direction of the rail (15).

2. A joint according to claim 1, **characterised in that** the mutual spacing between the engagement pins (18) is of the same magnitude as the expanse of the engagement pins in the longitudinal direction of the rail (15).

3. A joint according to claim 1, **characterised in that** the mutual spacing between the engagement pins considerably exceeds the expanse of the engagement pins in the longitudinal direction of the rail .

4. A joint according to any one of claims 1-3, **characterised in that** glue (11) is provided between the engagement pins (8 ) and the groove (10).

5. A joint according to any one of claims 1-4, **characterised in that** the engagement pins (18) have an essentially square cross section.

6. A joint according to any one of claims 1-5, **characterised in that** the engagement pins (18) are provided with flanges (19 ) that project laterally in relation to the longitudinal direction of the rail (15).

7. A joint according to claim 6, **characterised in that** the engagement pins
are provided with protruding flanges on those sides of the engagement pins that face towards each other.

8. A method of manufacturing an elongate rail (5; 15) for mounting on an element (2; 12) provided with a longitudinally extending groove (10), said method comprising the step of extruding a rail having a protrusion (13) that protrudes laterally and extends longitudinally in relation to a longitudinal direction of the rail, and comprising the step of removing portions of the protrusion (13) whereby separate engagement pins (18) are formed having a mutual distance in the longitudinal direction of the rail (5; 15) **characterised in that** the engagement pins (18) are angled in relation to the longitudinal direction of the rail (15) by an asymmetrical pressure being applied onto opposite sides thereof.

9. A method according to claim 8, **characterised in that** so much of the protrusion (13) is removed that the mutual distance between the engagement pins (18) is caused to be of the same magnitude as the expanse of the engagement pins in the longitudinal direction of the rail (15).

10. A method according to claim 8, **characterised in that** so much of the protrusion (13) is removed that the mutual spacing between the engagement pins considerably exceeds the expanse of the engagement pins in the longitudinal direction of the rail .

11. A method according to any one of claims 8-10, **characterised in that**, in the extrusion process, the engagement pins (18 ) are provided with flanges (19 ) that protrude laterally in relation to the longitudinal direction of the rail (15 ).

12. A method according to any one of claims 8-11, **characterised in that**, by removal of portions of the protrusion (13), outwardly protruding flanges are formed on those sides of the engagement pins that face towards each other.

13. A method according to any one of claims 8-12, **characterised in that** the extruded rail (5; 15) with the continuous, longitudinally extending protrusion (13) is transferred to a punching tool that removes portions of the protrusion by punching.

14. An elongate rail (5; 15) having an abutment face (17) for abutting on an element and having a protrusion protruding laterally in relation to a longitudinal direction of the rail (5; 15), said protrusion being divided into a plurality of separate engagement pins (18) spaced from each other in the longitudinal direction of the rail, **characterised in that** the cross section of the engagement pins (18) is angled in relation to the longitudinal direction of the rail (15).

## Patentansprüche

1. Verbindung zwischen einem Element (2; 12) und einer länglichen Schiene (5; 15) mit einer an dem Element anliegenden Anlagefläche (17), wobei das Element (2; 12) mit einer sich in Längsrichtung erstreckenden Rille (10) versehen ist, und die Schiene (5; 15) mit einem sich von der Anlagefläche der Schiene erstreckenden Vorsprung versehen ist, wobei der Vorsprung relativ zu einer Längsrichtung der Schiene (5; 15) seitlich hervorsteht, sich in die in Längsrichtung sich erstreckende Rille (10) des Elements (2; 12) erstreckt und in eine Mehrheit von getrennten, in der Längsrichtung der Schiene voneinander beabstandeten Einraststiften (18) geteilt ist, **dadurch gekennzeichnet, dass** der Querschnitt der Einraststifte (18) relativ zur Längsrichtung der Schiene (15) abgewinkelt ist.

2. Verbindung nach Anspruch 1, **dadurch gekennzeichnet, dass** der gegenseitige Abstand zwischen den Einraststiften (18) der gleichen Größenordnung ist wie die in der Längsrichtung der Schiene (15) bestehende Weite der Einraststifte.

3. Verbindung nach Anspruch 1, **dadurch gekennzeichnet, dass** der gegenseitige Abstand zwischen den Einraststiften die in der Längsrichtung der Schiene bestehende Weite der Einraststifte wesentlich übersteigt.

4. Verbindung nach einem der Ansprüche 1 bis 3, **dadurch gekennzeichnet, dass** zwischen den Einraststiften (8) und der Rille (10) ein Klebstoff (11) vorgesehen ist.

5. Verbindung nach einem der Ansprüche 1 bis 4, **dadurch gekennzeichnet, dass** die Einraststifte (18) einen im Wesentlichen quadratischen Querschnitt aufweisen.

6. Verbindung nach einem der Ansprüche 1 bis 5, **dadurch gekennzeichnet, dass** die Einraststifte (18) mit relativ zur Längsrichtung der Schiene (15) seitlich hervorstehenden Flanschen (19) versehen sind.

7. Verbindung nach Anspruch 6, **dadurch gekennzeichnet, dass** die Einraststifte an den Seiten, die einander zugewandt sind, mit hervorstehenden Flanschen versehen sind.

8. Verfahren zur Herstellung einer länglichen Schiene (5; 15) zur Befestigung an einem mit einer sich in Längsrichtung erstreckenden Rille (10) versehenen Element (2; 12), welches Verfahren den Schritt eines Strangpressens einer Schiene, welche einen seitlich hervorstehenden und sich relativ zu einer Längsrichtung der Schiene in Längsrichtung erstreckenden Vorsprung (13) aufweist, und den Schritt eines Entfernens von Abschnitten des Vorsprungs (13) umfasst, wodurch getrennte, in der Längsrichtung der Schiene (5; 15) gegenseitig voneinander beabstandete Einraststifte (18) gebildet werden, **dadurch gekennzeichnet, dass** die Einraststifte (18) durch einen an deren gegenüberliegenden Seiten beaufschlagten, asymmetrischen Druck relativ zur Längsrichtung der Schiene (15) abgewinkelt werden.

9. Verfahren nach Anspruch 8, **dadurch gekennzeichnet, dass** so viel des Vorsprungs (13) entfernt wird, dass der gegenseitige Abstand zwischen den Einraststiften (18) der gleichen Größenordnung wird wie die in der Längsrichtung der Schiene (15) bestehende Weite der Einraststifte.

10. Verfahren nach Anspruch 8, **dadurch gekennzeichnet, dass** so viel des Vorsprungs (13) entfernt wird, dass der gegenseitige Abstand zwischen den Einraststiften die in der Längsrichtung der Schiene bestehende Weite der Einraststifte wesentlich übersteigt.

11. Verfahren nach den Ansprüchen 8 bis 10, **dadurch gekennzeichnet, dass** die Einraststifte (18) im Strangpressverfahren mit relativ zur Längsrichtung der Schiene (15) seitlich hervorstehenden Flanschen (19) versehen werden.

12. Verfahren nach einem der Ansprüche 8 bis 11, **dadurch gekennzeichnet, dass** an den Seiten der Einraststifte, die einander zugewandt sind, bei dem Entfernen von Abschnitten des Vorsprungs (13) nach außen hervorstehende Flansche gebildet werden.

13. Verfahren nach einem der Ansprüche 8 bis 12, **dadurch gekennzeichnet, dass** die stranggepresste Schiene (5; 15) mit dem kontinuierlichen, sich in Längsrichtung erstreckenden Vorsprung (13) einem Stanzwerkzeug zugeführt wird, welches durch Stanzen Abschnitte des Vorsprungs entfernt.

14. Längliche Schiene (5; 15), welche eine Anlagefläche (17) zur Anlage an einem Element und einen relativ zu einer Längsrichtung der Schiene (5; 15) seitlich hervorstehenden Vorsprung aufweist, welcher Vorsprung in eine Mehrheit von getrennten, in der Längsrichtung der Schiene voneinander beabstandeten Einraststiften (18) geteilt ist, **dadurch gekennzeichnet, dass** der Querschnitt der Einraststifte (18) relativ zur Längsrichtung der Schiene (15) abgewinkelt ist.

## Revendications

1. Liaison entre un élément (2 ; 12) et un rail allongé (5 ; 15) ayant une face d'aboutement (17), butant contre l'élément, ledit élément (2 ; 12) étant pourvu d'une gorge s'étendant longitudinalement (10), et ledit rail (5 ; 15) étant pourvu d'une saillie s'étendant depuis la face d'aboutement du rail, saillant latéralement par rapport à une direction longitudinale du rail (5 ; 15), s'étendant dans la gorge s'étendant longitudinalement (10) de l'élément (2 ; 12), et étant divisée en une pluralité de goupilles d'engagement séparées (18) espacées les unes des autres dans la direction longitudinale du rail, **caractérisée en ce que** la section transversale des goupilles d'engagement (18) est inclinée par rapport à la direction longitudinale du rail (15).

2. Liaison selon la revendication 1, **caractérisée en ce que** l'espacement mutuel entre les goupilles d'engagement (18) est du même ordre de grandeur que l'étendue des goupilles d'engagement dans la direction longitudinale du rail (15).

3. Liaison selon la revendication 1, **caractérisée en ce que** l'espacement mutuel entre les goupilles d'engagement dépasse considérablement l'étendue des goupilles d'engagement dans la direction longitudinale du rail.

4. Liaison selon l'une quelconque des revendications 1 à 3, **caractérisée en ce que** l'on prévoit de la glu (11) entre les goupilles d'engagement (8) et la gorge (10) .

5. Liaison selon l'une quelconque des revendications 1 à 4, **caractérisée en ce que** les goupilles d'engagement (18) ont une section transversale essentiellement carrée.

6. Liaison selon l'une quelconque des revendications 1 à 5, **caractérisée en ce que** les goupilles d'engagement (18) sont pourvues de brides (19) qui font saillie latéralement par rapport à la direction longitudinale du rail (15).

7. Liaison selon la revendication 6, **caractérisée en ce que** les goupilles d'engagement sont pourvues de brides saillantes sur les côtés des goupilles d'engagement qui sont tournés l'un vers l'autre.

8. Procédé de fabrication d'un rail allongé (5 ; 15) destiné à être monté sur un élément (2 ; 12) pourvu d'une gorge s'étendant longitudinalement (10), ledit procédé comprenant l'étape consistant à extruder un rail ayant une saillie (13) qui dépasse latéralement et s'étend longitudinalement par rapport à une direction longitudinale du rail, et comprenant l'étape consistant à enlever des portions de la saillie (13), des goupilles d'engagement séparées (18) étant ainsi formées et ayant une distance mutuelle dans la direction longitudinale du rail (5 ; 15), **caractérisé en ce que** les goupilles d'engagement (18) sont inclinées par rapport à la direction longitudinale du rail (15) par une pression asymétrique appliquée sur des côtés opposés de celles-ci.

9. Procédé selon la revendication 8, **caractérisé en ce que** l'on retire une quantité telle de la saillie (13) que la distance mutuelle entre les goupilles d'engagement (18) soit du même ordre de grandeur que l'étendue des goupilles d'engagement dans la direction longitudinale du rail (15).

10. Procédé selon la revendication 8, **caractérisé en ce que** l'on retire une quantité telle de la saillie (13) que l'espacement mutuel entre les goupilles d'engagement dépasse considérablement l'étendue des goupilles d'engagement dans la direction longitudinale du rail.

11. Procédé selon l'une quelconque des revendications 8 à 10, **caractérisé en ce que** dans le processus d'extrusion, les goupilles d'engagement (18) sont pourvues de brides (19) qui font saillie latéralement par rapport à la direction longitudinale du rail (15).

12. Procédé selon l'une quelconque des revendications 8 à 11, **caractérisé en ce que**, lors de l'enlèvement de portions de la saillie (13), des brides saillant vers l'extérieur sont formées sur les côtés des goupilles d'engagement qui sont tournés l'un vers l'autre.

13. Procédé selon l'une quelconque des revendications 8 à 12, **caractérisé en ce que** le rail extrudé (5 ; 15) avec la saillie continue s'étendant longitudinalement (13) est transféré à un outil de poinçonnage qui enlève des portions de la saillie par poinçonnage.

14. Rail allongé (5 ; 15) ayant une face d'aboutement (17) pour venir en butée contre un élément et ayant une saillie s'étendant latéralement par rapport à une direction longitudinale du rail (5 ; 15), ladite saillie étant divisée en une pluralité de goupilles d'engagement séparées (18) espacées les unes des autres dans la direction longitudinale du rail, **caractérisé en ce que** la section transversale des goupilles d'engagement (18) est inclinée par rapport à la direction longitudinale du rail (15).
